# EUROPÄISCHE PATENTSCHRIFT

(11) **EP 1 340 137 B1**
(45) Veröffentlichungstag und Bekanntmachung des Hinweises auf die Patenterteilung: **04.08.2004**
(21) Anmeldenummer: 01994743.1
(22) Anmeldetag: 28.11.2001
(51) Int. Cl.: G06F 1/32

(54) **SYSTEM ZUR STEUERUNG ODER REGELUNG**
CONTROL OR REGULATION SYSTEM
SYSTEME DE COMMANDE OU DE REGULATION

(30) Priorität: 06.12.2000 DE 10060539
(43) Veröffentlichungstag der Anmeldung: 03.09.2003
(73) Patentinhaber: DaimlerChrysler AG, 70567 Stuttgart (DE)
(72) Erfinder: HUBER, Martin, 70806 Kornwestheim (DE); KUDER, Helmar, 73262 Reichenbach (DE); SPOHR, Jochem, 71139 Ehningen (DE)
(74) Vertreter: Berghold, Klaus
(86) Internationale Anmeldenummer: PCT/EP2001/013871
(87) Internationale Veröffentlichungsnummer: WO 2002/046895

(56) Entgegenhaltungen:
- EP-A- 0 870 648
- US-A- 5 949 974

## Beschreibung

Die Erfindung betrifft ein System zur Steuerung oder Regelung, insbesondere von Kraftfahrzeugfunktionen, mit mindestens zwei Steuergeräten, die über einen Datenbus miteinander vernetzt sind, wobei das System zur Verringerung der Leistungsaufnahme ganz oder nur teilweise in bestimmte Leistungsaufnahmezustände versetzbar ist, in denen Steuergeräte unter voller Leistungsaufnahme oder in einem Leistungsaufnahmezustand arbeiten, in dem die Leistungsaufnahme reduziert ist.

Bei Verkehrsmitteln werden derartige vernetzte Systeme, bspw. ein sogenannter CAN-Bus gemäß ISO 11519 bzw. ISO 11898 eingesetzt, um Motorfunktionen oder Komfortfunktionen im Innenraum zu steuern. In den letzten Jahren ist eine weitere Spezialisierung bei diesen Datenbussystemen entstanden, so dass auch weiter spezialisierte Datenbusse für brake by wire-Systeme oder für die Telekommunikation, wie z. B. D2B- oder MOST-Datenbusse, zum Einsatz kommen. Durch den hohen Grad der Vernetzung besteht nun das Problem, dass das Bordnetz selbst dann belastet wird, wenn das Verkehrsmittel abgestellt ist und eigentlich keine oder nur wenige Steuerungsfunktionen erforderlich sind. Um die Leistungsaufnahme im Ruhezustand zu verringern, werden die Steuergeräte nach einer bestimmten Zeit abgeschaltet, wobei aber erforderlich ist, dass das System beispielsweise ein Signal von einem Transponder zum Entriegeln einer Tür o. dgl. empfangen kann.

Die DE 197 15 880 C1 offenbart ein System mit datenbusvernetzten Steuergeräten. Ein einzelnes Steuergerät ist als Master-Steuergerät vorgesehen und ist mit einer Standby-Betriebsfunktion mit Weckbereitschaft ausgestattet und ständig aktiv. Im Ruhezustand des Kraftfahrzeugs befindet sich das Mastersteuergerät in dem Standby-Zustand, während die übrigen Steuergeräte abgeschaltet sind. Erhält das Mastersteuergerät ein Wecksignal, so weckt es über eine Steuerleitung die übrigen Steuergeräte, so dass diese wieder mit Strom versorgt werden und in ihrer Normalfunktion einsatzfähig sind.

Die EP 0 870 648 A1 offenbart ein Datenbussystem für ein Kraftfahrzeug mit einer Mehrzahl von elektronischen Busteilnehmern, wobei bei ausgeschalteter Zündung jeder Busteilnehmer zum Zweck von zeitweise notwendigem Datenaustausch individuell ein- und ausgeschaltet werden kann.

Die US 5 949 974 offenbart ein System zum Ablesen und zur Steuerung des Zustands der Stromversorgung von vernetzten Geräten. Dabei wird der Zustand des Stromschalters eines Gerätes abgetastet und der Stromschalter selbst wird ein- oder abgeschaltet.

In der DE 196 11 945 C1 ist ein System offenbart, dessen Steuergeräte in einem Betriebszustand verharren, aus dem sie sehr schnell wieder in einen Normalbetriebszustand versetzbar sind. Dazu ist vor jedem Steuergerät und vor dessen Busprotokoll-Modul eine Halbleiterschaltung geschaltet, die aus einem übergeordneten Spannungspotential versorgbar ist und mittels eines Steuereingangs aus einem Sleep-Modus geweckt werden kann. Der Weckvorgang erfolgt über ein Steuersignal, in dessen Folge die genannte Halbleiterschaltung die Stromversorgung durchschaltet.

Dieses Verfahren wird vor allem dort angewendet, wo eindeutig bestimmbar ist, welche Steuergeräte abgeschaltet werden können. Mit zunehmender Vernetzung wird es jedoch immer schwieriger, die Anwendungsprogramme so auf die Steuergeräte zu verteilen, dass das gesamte Steuergerät ohne Weiteres abgeschaltet werden kann. Bei verteilten Systemen mit einem hohen Vernetzungsgrad, bei dem auf einem Steuergerät eine Vielzahl unabhängiger Anwendungsprozesse ablaufen, deren Ergebnisdaten oft Anwendungsprozessen in einem anderen Steuergerät zur Verfügung stehen müssen, ist ein Abschalten des gesamten Systems ohne eine vorausgehende Prüfung nicht durchführbar. Es ist oft erforderlich, dass bestimmte Anwendungsprozesse auf verschiedenen Steuergeräten auch im Ruhezustand des Verkehrsmittels ausführbar sind.

Schließlich offenbart die US 5,752,050 ein System zur Steuerung der Stromversorgung bei einem Personalcomputer, um die Lebensdauer des Akkus eines tragbaren Computers zu verlängern. Dabei kann auch die Leistungsaufnahme von Peripheriegeräten gesteuert werden, die an den Personalcomputer angeschlossen sind.

Es ist Aufgabe der vorliegenden Erfindung, ein datenbusvernetztes System, derart weiterzubilden, dass einzelne Steuergeräte und Systemteile in einen definierten Leistungsaufnahmezustand versetzt werden können, wobei die Leistungsaufnahme in Abhängigkeit von den vorgesehenen Anwendungsprozessen auf den Steuergeräten flexibel einstellbar ist.

Diese Aufgabe wird durch die Merkmale des Anspruchs 1 gelöst. Danach ist mehreren Steuergeräten jeweils ein Steuerungsprogramm mit einer Schnittstelle zugeordnet, über die Daten bezüglich der Leistungsaufnahmezustände für den optimalen Ablauf vorhandener Anwendungsprogramme entweder von einem Programm innerhalb des Steuergeräts oder von einer externen Anforderung an das Steuerungsprogramm übertragbar sind, wobei jedes Steuerungsprogramm Mittel zur Berechnung des erforderlichen Leistungsaufnahmezustands für das zugeordnete Steuergerät aus den Daten aufweist und wobei Umschaltmittel vorgesehen sind, die das Steuergerät entsprechend dem Anforderungen innerhalb eines oder mehrerer Steuergeräte von einem Leistungsaufnahmezustand in einen anderen Leistungsaufnahmezustand überführen.

Erfindungsgemäß ist dabei erkannt worden, dass bei verteilten Systemen, deren Anwendungsprogramme auf verschiedenen Steuergeräten in Form von einzelnen Modulen verteilt sind, auch das Power-Management-Programm ein auf mehrere Steuergeräte verteiltes Programm sein muss. Dabei werden die einzelnen Leistungsaufnahme zustände durch die Erfordernisse innerhalb eines Steuergeräts bestimmt und nicht wie in der Vergangenheit statisch vorbestimmt. Dies ist erforderlich, da bei komplexen, verteilten Software-Systemen auf verschiedenen Steuergeräten eine externe, vorprogrammierte Powermanagement-Routine nicht geeignet ist, da eine Kenntnis der bei unterschiedlichen Programmherstellern erzeugten Anwendungsprogrammen nicht mehr vorhanden ist oder da das Power-Management auf die unterschiedlichen Anwendungsprogramme auf den Steuergeräten flexibel anpassbar sein muss.

Das System der vorliegenden Erfindung weist bei einer Ausführungsform mehrere Steuergeräte auf, die untereinander über einen Datenbus vernetzt sind. Im Beispiel ist der Datenbus ein sogenannter CAN-Datenbus, über den Daten der einzelnen Steuergeräte ausgetauscht werden können. Jedes Steuergerät weist einen Mikrorechner auf, der für die Verarbeitung der Daten innerhalb des Steuergerätes zuständig ist. Im Steuergerät werden ferner Daten von Sensoren und Daten von anderen Steuergeräten verarbeitet. Als Ergebnis können wieder Daten über den Datenbus an andere Steuergeräte oder direkt an einen Aktor, bspw. einen Elektromotor, ausgegeben werden, um zum Beispiel einen Vorgang bei der Sitzverstellung auszulösen.

Zur Umsetzung der Datensignale von den Spannungspegeln des Mikrorechners auf die Spannungspegel im zweiadrigen Datenbus ist ein Halbleiterbaustein, bspw. ein CAN-Transceiver, erforderlich, der die Spannungspegel sowohl beim Empfangen als auch beim Senden der Daten umsetzt. Das Datenübertragungsprotkoll umfasst bestimmte Zusatzdaten, wie Fehlererkennungsdaten und Prioritätsdaten, die zu den eigentlich zu übertragenden Daten hinzufügt werden.

Jedem Steuergerät ist eine Spannungsversorgungseinrichtung zugeordnet, über die das Steuergerät mit der notwendigen Batteriespannung versorgt wird. Außerdem weist jedes Steuergerät einen Taktgeber auf, der die Taktfrequenz vorgibt, mit der der Mikrorechner arbeitet. Die Steuergeräte weisen bevorzugt eine Standardsoftware auf, die eine Art Betriebssystem für jedes Steuergerät bereitstellt, und eine oder mehrere Anwendungsprogramme oder -module, die mit dieser Standardsoftware zusammenwirken und die Prozesse der jeweiligen Anwendungen bereitstellen.

Ein Modul der Standardsoftware ist ein sogenanntes Power-Management-Modul mit einem Steuerungsprogramm, das zumindest für ein Steuergerät dessen Leistungsaufnahmezustände steuert. Für jedes einzelne Steuergerät kann ein derartiges Power-Management-Modul als Bestandteil der Standardsoftware vorgesehen sein. Das Power-Management-Modul ist bevorzugt ein Software-Modul, dessen Steuerungsprogramm die Leistungsaufnahme des Gesamtsystems möglichst gering halten soll. Da bei modernen Verkehrsmitteln die Anwendungsprogramme auf unabhängige, aber gleichberechtigte Teilanwendungen, sogenannte Tasks, aufgeteilt sind, kann oftmals nur unter Kenntnis der laufenden Anwendungen auf einem Steuergerät entschieden werden, wann in einen Zustand mit geringerer Leistungsaufnahme übergegangen werden kann.

Oftmals wird die Anwendungssoftware bei unterschiedlichen Software-Entwicklern hergestellt, so dass die Leistungsaufnahme-Steuerung nicht mit der ursprünglichen Anwendungssoftware mit programmiert werden kann. Vielmehr muss die Steuerung der Leistungsaufnahme davon abhängig gemacht werden, welche Anwendungsprogramme bzw. welche Module auf jedem Steuergerät ausgeführt werden.

Zur Koordination des Power-Managements der Steuergeräte mit dem Leistungsaufnahmebedarf der von der Fahrzeugkonfiguration abhängenden Anwendungssoftware ist ein Netzwerkmanagement-Algorithmus vorgesehen, der zur Übertragung der Power-Management-Daten der einzelnen Steuergeräte ausgelegt ist und insofern sicherstellt, dass nur die Steuergeräte in einen Standby-Modus oder Leistungslos geschaltet werden, die momentan nicht benötigt werden.

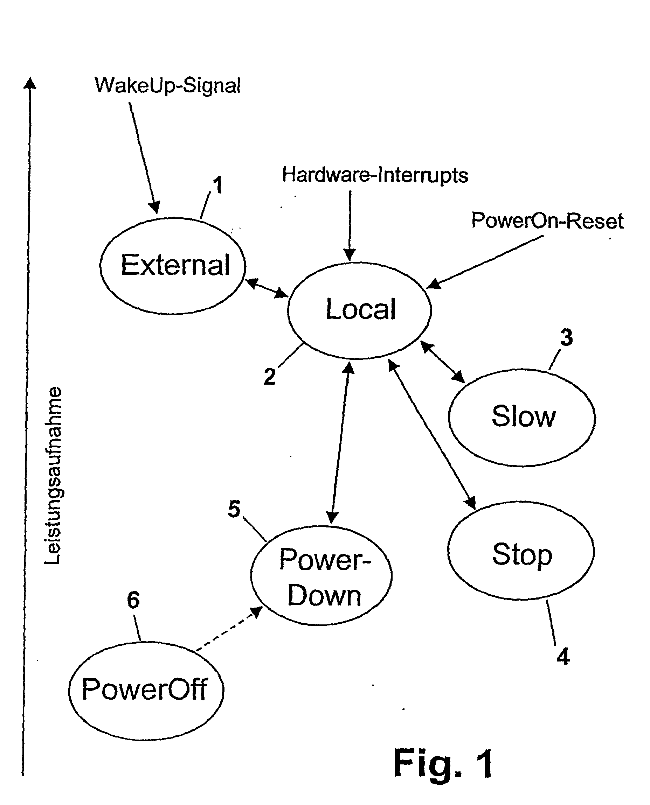

Es gibt nun verschiedene Möglichkeiten, die Lehre der vorliegenden Erfindung in vorteilhafter Weise auszugestalten und weiterzubilden. Dazu ist einerseits auf die untergeordneten Ansprüche und andererseits auf die nachfolgende Erläuterung einer Ausführungsform zu verweisen. In der Figur 1 ist ein Zustandsdiagramm für die verschiedenen Leistungsaufnahmezustände der Komponenten, insbesondere der Steuergeräte, dargestellt.

Erfindungsgemäß sieht das System ein Steuerungsprogramm vor, das in Bezug auf die Leistungsaufnahme des Systems bzw. der Steuergeräte abgestufte Leistungsaufnahmezustände einstellen kann. Dabei ist vorgesehen, dass das Powermanagement-Modul die Leistungsaufnahmezustände external 1, local 2, slow 3, stop 4, powerdown 5 und poweroff 6 einnehmen kann.

Im external-Leistungsaufnahmezustand 1 ist das Steuergerät mit einer Fahrzeugbatteriespannung Vbat versorgt und der Elektronik-Spannungspegel Vcc wird über einen dem Steuergerät zugeordneten Spannungsregler bereitgestellt. Dabei ist eine externe Kommunikation, d.h. die Datenübertragung von Anwendungsdaten über den Datenbus oder über eine andere externe Steuergeräte-Schnittstelle zulässig. In diesem Zustand gibt es keine Einschränkungen bezüglich der Ausführung von Anwendungsprogrammen auf dem Steuergerät.

Im local-Leistungsaufnahmezustand 2 ist das Steuergerät mit der Fahrzeugbatteriespannung Vbat versorgt und der Elektronik-Spannungspegel Vcc wird bereitgestellt. Dabei ist eine externe Kommunikation deaktiviert. In diesem Zustand gibt es keine Einschränkungen bezüglich der Ausführung von Anwendungsprogrammen auf dem Steuergerät, soweit hier keine externe Kommunikation des Anwendungsprogramms auf den Datenbus oder eine Steuergeräte-Schnittstelle vorgesehen ist.

Im slow-Leistungsaufnahmezustand 3 ist das Steuergerät mit der Fahrzeugbatteriespannung Vbat versorgt und der Elektronik-Spannungspegel Vcc wird bereitgestellt. In diesem Leistungsaufnahmezustand wird der Prozessortakt und/oder der Takt der Datenkommunikation heruntergeteilt, so dass die Datenverarbeitung auf dem Steuergerät und/oder im System verlangsamt ist. In diesem Zustand werden bevorzugt nur bestimmte, für die langsame Datenverarbeitung zugelassene Verwaltungs- und Anwendungsprogramme ausgeführt. Zusätzlich kann lediglich die Ausführung von Software mit hoher Priorität vorgesehen sein.

Im stop-Leistungsaufnahmezustand 4 ist die Fahrzeugbatteriespannung Vbat noch am Steuergerät zum schnellen Hochfahren des Systems vorhanden, wobei die Spannungsversorgung zur Bereitstellung des Elektronik-Spannungspegels Vcc abgeschaltet und der Prozessortakt angehalten ist, so dass grundsätzlich keine Software mehr ausführbar ist.

Im powerdown-Leistungsaufnahmezustand 5 wird das System weder mit der Spannung Vcc noch mit Vbat versorgt, so dass die Leistungsaufnahme des Systems am geringsten ist. Im Poweroff-Zustand 6 ist das Steuergerät von den Klemmen zur Stromversorgung vollständig abgeklemmt.

Das System kann nun durch die Power-Management-Software von einem in den nächsten Zustand überführt werden, wobei eine Ablaufsteuerung sicherstellt, dass nur die für das System verträglichen Leistungsaufnahmezustände durch eines oder mehrere Steuergeräte eingenommen werden können. Dabei ist die Ablaufsteuerung bevorzugt in Abhängigkeit vom beim Netzwerkmanagement eingesetzten Algorithmus programmiert, so dass beispielsweise ein neuer Leistungsaufnahmezustand nur dann eingenommen werden kann, wenn der vorhergehenden Leistungsaufnahmezustand im System vollständig abgeschlossen ist. Für die Ablaufsteuerung ist eine Programmierschnittstelle, bspw. eine Schnittstelle zur Ankopplung eines Bedienungsrechners, vorgesehen, so dass abhängig von der Konfiguration des gesamten Systems die Ablaufsteuerung in jedem Steuergerät flexibel über die Eingabe unterschiedlicher Parameter angepasst werden kann.

Die Power-Management-Software stellt dabei die im jeweiligen Steuergerät erforderlichen Bedingungen ein, wobei die Anforderung für die Überführung von einem in den nächsten Leistungsaufnahme-Zustand auch über sogenannte Interrupt-Signale an den Mikrorechner des Steuergeräts gemeldet werden kann. Beispielsweise kann ein Steuergerät aus dem local-Zustand 2 über einen Hardware-Interrupt geweckt werden, der eine externe Datenübertragung anfordert. Andererseits kann ein Steuergerät aus dem slow- 3 oder stop-Zustand 4 über einen Steuereingang geweckt werden, wodurch bspw. ein externer Türöffnungssensor in einem Kraftfahrzeug anzeigt, dass das Fahrzeug für die Anforderungen des Fahrers volle Leistungsbereitschaft erreichen muss. Andererseits kann der Übergang in einen anderen Leistungsaufnahmezustand auch über den Datenbus von einem anderen Steuergerät angefordert werden. Nach einer bestimmten Zeit ohne Anforderung von Aufgaben schaltet die Power-Management-Software gegebenenfalls über Zwischenstufen in den darunter liegenden Leistungsaufnahmezustand.

Zwischen der als Betriebssystem wirkenden Standard-Software und der Anwendungssoftware eines Steuergerätes ist ein sogenanntes Anwendungsprogramm-Interface vorgesehen. Die Power-Management-Software als Bestandteil der Standard-Software des Steuergeräts weist dabei eine eigene Schnittstelle zur Anwendungssoftware auf. Über diese Schnittstelle werden die momentan erforderlichen Leistungsaufnahmezustände des Steuergeräts aufgrund der laufenden Anwendungsprogramme übertragen und es wird der geringste benötigte Leistungsaufnahmezustand für das Steuergerät eingestellt. Bei einer Ausführungsform ist vorgesehen, dass die Power-Management-Software von mehreren Anwendungsprogrammen Daten bezüglich des erforderlichen Leistungsaufnahmezustands über die Schnittstelle erhält. Da jedes Anwendungsprogramm den niedrigsten Leistungsaufnahmezustand übermittelt, der momentan möglich ist, stellt dann die Power-Management-Software den höchsten der von den Anwendungsprogrammen übermittelten Leistungsaufnahmezuständen ein, so dass die Anwendungssoftware bei geringster Leistungsaufnahme optimal ausgeführt werden kann.

Die Power-Management-Software besteht aus mehreren Power-Management-Modulen, die von verschiedenen Programmierern erstellt werden können. Da das Power-Management in die Hardware eingreifen muss, wird die Powermangement-Software bevorzugt mit der Standard-Software gekoppelt und weist eine Software-Schnittstelle zu den Anwendungsprogrammen auf. Die Power-Management-Software hat vor einem neuen Übergang in einen anderen Leistungsaufnahmezustand zu prüfen, dass kein weiterer Übergang in einen anderen Leistungsaufnahmezustand angefordert ist und gegebenenfalls zu warten, bis der vorhergehende Übergang vollständig abgeschlossen ist.

Bei einer anderen Ausführungsform ist vorgesehen, dass Übergänge von einem niedrigeren zu einem höheren Leistungsaufnahmezustand unverzüglich erfolgen, so dass das System ohne Zeitverzögerungen leistungsbereit ist. Bei Übergängen von einem höheren zu einem niedrigeren Leistungsaufnahmezustand können erfindungsgemäß Wartezeiten vorgesehen sein, um zu vermeiden, dass nach kürzester Zeit wieder auf einen höheren Leistungsaufnahmezustand zurückgeschaltet werden muss.

Das System kann Anzeigeroutinen aufweisen, über die der momentan eingestellte Leistungsaufnahmezustand über eine angeschlossenes System, bspw. in einer Fahrzeugreparaturwerkstatt, angezeigt wird. Auch kann über eine externe Schnittstelle ein Leistungsaufnahme-Zustand 1-6 vorgegeben werden.

## Patentansprüche

1. System zur Steuerung oder Regelung, insbesondere von Kraftfahrzeugfunktionen, mit mindestens zwei Steuergeräten, die über einen Datenbus miteinander vernetzt sind, wobei das System zur Verringerung der Leistungsaufnahme ganz oder nur teilweise in bestimmte Leistungsaufnahmezustände (1 bis 6) versetzbar ist, in denen Steuergeräte unter voller Leistungsaufnahme (1) oder in einem Leistungsaufnahmezustand (2 bis 6) arbeiten, in dem die Leistungsaufnahme reduziert ist,
**dadurch gekennzeichnet, dass** mehreren Steuergeräten jeweils ein Steuerungsprogramm mit einer Schnittstelle zugeordnet ist, über die Daten bezüglich der Leistungsaufnahmezustände (1 bis 6) für den optimalen Ablauf vorhandener Anwendungsprogramme entweder von einem Programm innerhalb des Steuergeräts oder von einer externen Anforderung an das Steuerungsprogramm übertragbar sind, wobei jedes Steuerungsprogramm Mittel zur Berechnung des erforderlichen Leistungsaufnahmezustands (1 bis 6) für das zugeordnete Steuergerät aus den Daten aufweist und dass Umschaltmittel vorgesehen sind, die das Steuergerät entsprechend den Anforderungen innerhalb eines oder mehrerer Steuergeräte von einem Leistungsaufnahmezustand (1 bis 6) in einen anderen Leistungsaufnahmezustand (1 bis 6) überführen.

2. System nach Anspruch 1, **dadurch gekennzeichnet, dass** das Steuerungsprogramm eine Hierarchie der einstellbaren Leistungsaufnahmezustände (1 bis 6) bereitstellt und aufgrund der über die Schnittstelle übertragenen Daten eine Information an das Umschaltmittel überträgt, um für ein Steuergerät einen möglichst niedrigen Leistungsaufnahmezustand (1 bis 6) einzustellen.

3. System nach Anspruch 1 oder 2, **dadurch gekennzeichnet, dass** durch das Steuerungsprogramm ein Leistungsaufnahmezustand (2), bei dem eine externe Kommunikation über den Datenbus gesperrt ist, und ein Leistungsaufnahmezustand (1) einstellbar ist, bei dem die externe Kommunikation zulässig ist.

4. System nach einem der Ansprüche 1 bis 3, **dadurch gekennzeichnet, dass** durch das Steuerungsprogramm ein Leistungsaufnahmezustand (3) einstellbar ist, bei dem der Prozessortakt eines Steuergerätes gegenüber dem Betrieb bei Vollast reduziert ist.

5. System nach einem der Ansprüche 1 bis 4, **dadurch gekennzeichnet, dass** durch das Steuerungsprogramm ein Leistungsaufnahmezustand (4) einstellbar ist, bei dem die Batteriespannung (Vbat) am Steuergerät anliegt, jedoch der Elektronik-Spannungspegels (Vcc) abgeschaltet ist.

6. System nach Anspruch 1, **dadurch gekennzeichnet, dass** die Umschaltmittel eine Verzögerungszeit zwischen der Anforderung durch die Daten an der Schnittstelle bis zum tatsächlichen Umschaltvorgang vorsehen.

7. System nach Anspruch 6, **dadurch gekennzeichnet, dass** in Abhängigkeit von den eingestellten oder angeforderten Leistungsaufnahmezuständen unterschiedliche Verzögerungszeiten vorgesehen sind.

8. System nach Anspruch 1, **dadurch gekennzeichnet, dass** für das System ein Leistungsaufnahmezustand (1 bis 6) vorgebbar und über den Datenbus an die Steuergeräte übertragbar ist.

## Claims

1. System for open-loop or closed-loop control, in particular of motor vehicle functions, with at least two control devices which are networked together via a data bus, wherein the system for reducing the power consumption can be operated entirely or only partially in specific power consumption modes (1 to 6), in which control devices work with full power consumption (1) or in a power consumption mode (2 to 6) in which the power consumption is reduced, **characterised in that** associated with a plurality of control devices is a respective control programme with an interface, via which data with respect to the power consumption modes (1 to 6) can be transmitted for the optimum operation of existing application programmes either by a programme within the control device or by an external request to the control programme, each control programme having means to calculate the required power consumption mode (1 to 6) for the associated control device from the data, and **in that** switching means are provided which transfer the control device according to requirements within one or more control devices from a power consumption mode (1 to 6) into another power consumption mode (1 to 6).

2. System according to claim 1, **characterised in that** the control programme provides a hierarchy of adjustable power consumption modes (1 to 6) and, owing to the data transmitted via the interface, transmits information to the switching means to adjust a power consumption state (1 to 6) which is low as possible for a control device.

3. System according to claim 1 or 2, **characterised in that** a power consumption mode (2), in which an external communication via the data bus is blocked, and a power consumption mode (1), in which the external communication is allowed, can be adjusted by the control programme.

4. System according to any one of claims 1 to 3, **characterised in that** a power consumption mode (3), in which the processor clock pulse of a control device is reduced relative to operation at full load can be adjusted by the control programme.

5. System according to any one of claims 1 to 4, **characterised in that** a power consumption state (4) in which the battery voltage (Vbat) is present at the control device, but the electronics voltage level (Vcc) is switched off, can be adjusted by the control programme.

6. System according to claim 1, **characterised in that** the switching means provide a delay time between the request by the data at the interface and the actual switching process.

7. System according to claim 6, **characterised in that** different delay times are provided as a function of the adjusted or required power consumption modes.

8. System according to claim 1, **characterised in that** a power consumption mode (1 to 6) can be input for the system and can be transmitted via the data bus to the control devices.

## Revendications

1. Système pour la commande ou la régulation, en particulier de fonctions de véhicule, comprenant au moins deux appareils de commande, qui sont interconnectés entre eux au moyen d'un bus de données, le système pouvant être déplacé entièrement ou seulement partiellement dans certains états de puissance consommée (1 à 6) pour la réduction de la consommation, états dans lesquels des appareils de commande travaillent avec une pleine consommation (1) ou dans un état de puissance consommée(2 à 6) dans lequel la consommation est réduite,
**caractérisé en ce qu'**à plusieurs appareils de commande est attribué respectivement un programme de commande avec une interface par laquelle des données concernant les états de consommation de puissance (1 à 6) pour le déroulement optimal de programmes d'application existants peuvent être transmises soit par un programme à l'intérieur de l'appareil de commande soit par une demande externe au programme de commande, chaque programme de commande présentant des moyens pour le calcul de l'état de puissance consommée nécessaire (1 à 6) pour l'appareil de commande correspondant à partir des données et **en ce que** des moyens de commutation sont prévus qui transfèrent l'appareil de commande en fonction des exigences à l'intérieur d'un ou de plusieurs appareils de commande d'un état de puissance consommée (1 à 6) dans un autre état de puissance consommée (1 à 6).

2. Système selon la revendication 1, **caractérisé en ce que** le programme de commande met à disposition une hiérarchie des états réglables de puissance consommée (1 à 6) et, sur la base des données transmises par l'interface, transmet une information au moyen de commutation afin de régler pour l'appareil de commande un état de puissance consommée (1 à 6) le plus faible possible.

3. Système selon la revendication 1 ou 2, **caractérisé en ce que** le programme de commande peut régler un état de puissance consommée (2) avec lequel une communication externe est bloquée au moyen du bus de données, et un état de puissance consommée (1), pour lequel la communication externe est autorisée.

4. Système selon l'une quelconque des revendications 1 à 3, **caractérisé en ce que** le programme de commande permet de régler un état de puissance consommée (3) avec lequel le cycle du processeur d'un appareil de commande est réduit par rapport à l'exploitation à charge pleine.

5. Système selon l'une quelconque des revendications 1 à 4, **caractérisé en ce que** le programme de commande permet de régler un état de puissance consommée (4) avec lequel la tension de batterie (Vbat) s'applique sur l'appareil de commande, mais le niveau de tension de l'électronique (Vcc) est déconnecté.

6. Système selon la revendication 1, **caractérisé en ce que** les moyens de commutation prévoient une temporisation entre la demande par les données sur l'interface jusqu'à l'opération de commutation réelle.

7. Système selon la revendication 6, **caractérisé en ce que** différents temps de retard sont prévus en fonction des états de puissance consommée réglés ou demandés.

8. Système selon la revendication 1, **caractérisé en ce qu'**un état de puissance consommée (1 à 6) est prédéfinissable pour le système et peut être transmis par le bus de données aux appareils de commande.
